# EUROPEAN PATENT APPLICATION

(11) **EP 4 060 974 A1**
(43) Date of publication of application: **21.09.2022**
(21) Application number: 21194314.7
(22) Date of filing: 01.09.2021
(51) Int. Cl.: H04N 1/32, G06Q 10/10

(54) **IMAGE READING APPARATUS, IMAGE READING PROGRAM, AND IMAGE READING METHOD**

(30) Priority: 15.03.2021 JP 2021040932
(71) Applicant: FUJIFILM Business Innovation Corp., Minato-ku Tokyo (JP)
(72) Inventor: PENG, Xinyu, Yokohama-shi (JP); HASHIZUME, Takashi, Yokohama-shi (JP); CHIKYU, Masafumi, Yokohama-shi (JP); KAWASHIMA, Shuhei, Yokohama-shi (JP); KUDO, Yoshihiro, Yokohama-shi (JP)
(74) Representative: Becker, Eberhard

(57) **Abstract**

An image reading apparatus includes an image reading unit, and a processor configured to receive entry of an attribute for managing a business card from a user, cause the image reading unit to read the business card, and assign the attribute to a business card image that is an image obtained by reading the business card.

## Description

### BACKGROUND OF THE INVENTION

### (i) Field of the Invention

The present invention relates to an image reading apparatus, an image reading program, and an image reading method.

### (ii) Description of Related Art

JP2018-144296A discloses a technique of which an object is to provide an image forming apparatus that makes a process efficient in a case where a service is received from a service provider, in which the image forming apparatus acquires user information, acquires an access token for receiving provision of a service from a service provider, stores the acquired access token in association with the user information into a storage unit, accesses the service provider by using the access token stored in the storage unit in response to an instruction, and executes a function corresponding to the instruction.

JP2015-103917A discloses a technique of which an object is to solve a problem that to perform authentication and scan setting to an MFP is necessary in a case where scanning linked to a job flow is performed by the MFP, and thus there is concern in terms of security in inputting a user ID/password, and a scan setting operation takes time very much for the user, in which a use authorization code of an MFP is created based on authorization information and scan setting information, and the created use authorization code is input when scanning in the MFP, and thus the security risk and the labor of scan setting incident to input of the authentication information can be reduced.

JP2008-259012A discloses a technique of which an object is to provide an image processing system capable of storing information by associating the information with the front face and the rear face of one original without taking time and labor into a transparent sheet that stores a plurality of originals such as business cards in which the information is printed as the pair of the front face and the rear face, in which the image processing system is provided with a computer and an image processing apparatus (exemplified as an MFP) connected thereto, a control part of the MFP performs control for optically reading the whole of one face and the whole of the other face of a transparent sheet with a scanner part and transmitting obtained image data regarding the front face and the rear face to the computer with a communication part. A control part of the computer performs control for obtaining text information for each data region corresponding to storage ranges of the respective originals on the transparent sheet through character recognition for each of the image data regarding the front face and the rear face received by a communication part, associating the recognized text information with the front face and the rear face for each data region and storing the text information into a data storage part based on the preliminarily associated front face and rear face information indicating a positional relationship of the front face and the rear face between one side of the original and the other side of the original.

JP2019-140628A discloses a technique of which an object is to solve the problem that, in a multi-crop process in which a plurality of originals placed side by side on a platen are read and separated into individual originals, cutout of each original may not be successful depending on a reading method and characteristics of the original (a color of original paper and a thickness of the original), and, in a case where the cutout of the original needs to be corrected in this way, it is desired to present a user with a re-reading method capable of performing appropriate cutout, in which an image reading apparatus collectively reads a plurality of originals placed on a platen, displays a preview of a plurality of pieces of image data cut out for each original, and a user views the preview display, and then instructs the image reading apparatus to perform correction in a case where it is determined that cutout of each original has failed. The image reading apparatus presents the user with an appropriate method of re-reading an image according to an image reading method.

### SUMMARY OF THE INVENTION

In a case where a business card is registered in a business card management apparatus, first, a user reads the business card with an image reading apparatus, and then the user enters an attribute for managing the business card with the business card management apparatus, and the entered attribute is assigned to a read business card image. In the image reading apparatus, the user can enter a setting value for reading the business card, but the user cannot enter the attribute for managing the business card. Since the user cannot enter the attribute for managing the business card at the time of reading the business card, when using the business card management apparatus, the user is required to store and enter the attribute for managing the business card, and this work is complicated for the user. Therefore, an object of the present invention is to provide an image reading apparatus, an image reading program, and an image reading method capable of entering an attribute with the image reading apparatus in a case where an attribute is assigned to a business card image.

The concept of the present invention for achieving such an object lies in the inventions of the following items.

According to a first aspect of the present disclosure, there is provided an image reading apparatus including an image reading unit and a processor configured to receive entry of an attribute for managing a business card from a user, cause the image reading unit to read the business card, and assign the attribute to a business card image that is an image obtained by reading the business card.

According to an image reading apparatus of a second aspect, in the image reading apparatus of the first aspect, the attribute may include at least information regarding an owner of the business card.

According to an image reading apparatus of a third aspect, in the image reading apparatus of the second aspect, the processor may be configured to set a user who is using the image reading apparatus as the owner.

According to an image reading apparatus of a fourth aspect, in the image reading apparatus of the second aspect, the processor may be configured to display a user of a business card management apparatus that manages the business card image to be selectable as the owner.

According to an image reading apparatus of a fifth aspect, in the image reading apparatus of the third or fourth aspect, the processor may be configured to set a person who participated in a meeting together with the owner to be added as an owner of the business card.

According to an image reading apparatus of a sixth aspect, in the image reading apparatus of the first aspect, the attribute may include at least information indicating whether or not the business card is a past business card.

According to an image reading apparatus of a seventh aspect, in the image reading apparatus of the sixth aspect, the processor may be configured to, in a case where the business card is the past business card, associate the past business card with a current business card.

According to an image reading apparatus of an eighth aspect, in the image reading apparatus of the first aspect, the processor may be configured to perform control such that a screen for entering the attribute and a screen for receiving a business card reading instruction are displayed on the same screen.

According to an image reading apparatus of a ninth aspect, in the image reading apparatus of the first aspect, the processor may be configured to perform control such that an instruction for reading the business card is not capable of being given until a preset attribute is set.

According to an image reading apparatus of a tenth aspect, in the image reading apparatus of the first aspect, the processor may be configured to perform control such that an instruction for reading the business card is capable of being given until a preset attribute is set.

According to an image reading apparatus of an eleventh aspect, in the image reading apparatus of the ninth or tenth aspect, the preset attribute may include information regarding an owner of the business card and information indicating whether or not the business card is a past business card.

According to a twelfth aspect of the present disclosure, there is provided an image reading program causing a processor of a computer including the processor and an image reading unit to execute a process including receiving entry of an attribute for managing a business card from a user; causing the image reading unit to read the business card; and assigning the attribute to a business card image that is an image obtained by reading the business card.

According to a thirteenth aspect of the present disclosure, there is provided an image reading method including receiving entry of an attribute for managing a business card from a user, reading the business card; and assigning the attribute to a business card image that is an image obtained by reading the business card.

According to the first aspect of the present disclosure, in a case where an attribute is assigned to a business card image, the attribute can be entered by using the image reading apparatus.

According to the second aspect of the present disclosure, the information regarding an owner of the business card can be set as at least an attribute.

According to the third aspect of the present disclosure, the user using the image reading apparatus can be set as an owner of the business card.

According to the fourth aspect of the present disclosure, the user of the business card management apparatus that manages the business card image is selectable as an owner of the business card.

According to the fifth aspect of the present disclosure, a person who participated in the meeting together with the owner can be added as an owner of the business card.

According to the sixth aspect of the present disclosure, the information indicating whether or not the business card is a past business card can be set as at least an attribute.

According to the seventh aspect of the present disclosure, in a case where the business card is a past business card, the past business card can be associated with the current business card.

According to the eighth aspect of the present disclosure, the screen for entering the attribute and the screen for receiving a business card reading instruction can be displayed on the same screen.

According to the ninth aspect of the present disclosure, it is possible to perform control such that an instruction for reading the business card is not capable of being given until a preset attribute is set.

According to the tenth aspect of the present disclosure, it is possible to perform control such that an instruction for reading the business card can be given after a preset attribute is set.

According to the eleventh aspect of the present disclosure, as preset attributes, the information regarding an owner of the business card and the information indicating whether or not the business card is a past business card can be used.

According to the twelfth aspect of the present disclosure, in a case where an attribute is assigned to a business card image, the attribute can be entered by using the image reading apparatus.

According to the thirteenth aspect of the present invention, in a case where an attribute is assigned to a business card image, the attribute can be entered by using the image reading apparatus.

### BRIEF DESCRIPTION OF THE DRAWINGS

Exemplary embodiment(s) of the present invention will be described in detail based on the following figures, wherein:
Fig. 1 is a conceptual module configuration diagram showing a configuration example according to the present exemplary embodiment;
Figs. 2A and 2B are diagrams showing system configuration examples using the present exemplary embodiment;
Fig. 3 is a flowchart showing a process example according to the present exemplary embodiment;
Fig. 4A is a flowchart showing a process example according to the present exemplary embodiment;
Fig. 4B is a flowchart showing a process example according to the present exemplary embodiment;
Fig. 5 is a flowchart showing a process example according to the present exemplary embodiment;
Fig. 6 is a flowchart showing a process example according to the present exemplary embodiment;
Fig. 7 is an explanatory diagram showing a data structure example of a business card management table;
Fig. 8 is an explanatory diagram showing a data structure example of a user management table;
Fig. 9 is an explanatory diagram showing a data structure example of a schedule management table;
Fig. 10 is an explanatory diagram showing a display example according to the present exemplary embodiment;
Fig. 11 is an explanatory diagram showing a display example according to the present exemplary embodiment;
Fig. 12 is an explanatory diagram showing a display example according to the present exemplary embodiment;
Fig. 13 is an explanatory diagram showing a display example according to the present exemplary embodiment; and
Fig. 14 is an explanatory diagram showing a display example according to the present exemplary embodiment.

### DETAILED DESCRIPTION OF THE INVENTION

Hereinafter, with reference to the drawings, a description will be made of an exemplary embodiment for realizing the invention.

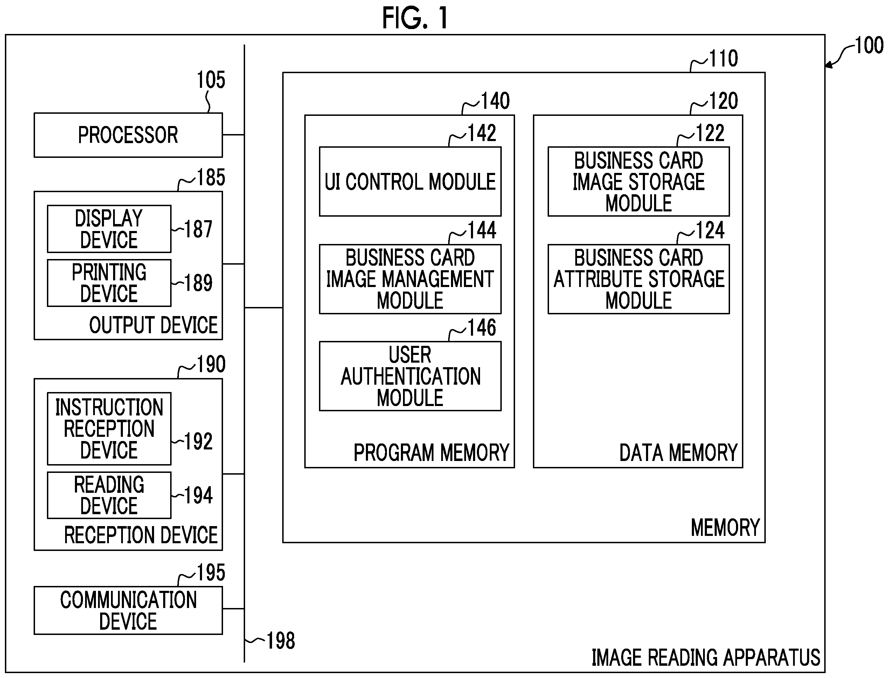

Fig. 1 is a conceptual module configuration diagram showing a configuration example according to the present exemplary embodiment.

The module generally indicates components such as software (including a computer program as analysis of the "software") or hardware which can be logically divided. Therefore, the module in the present exemplary embodiment indicates not only a module in a computer program but also a module in a hardware configuration. Therefore, in the present exemplary embodiment, a description will also be made of a computer program (for example, a program causing a computer to execute each procedure, a program causing a computer to function as each unit, or a program causing a computer to realize each function), a system, and a method for functioning as such a module. However, for convenience of description, "storing", "being stored", or words equivalent thereto are used, but, these words indicate that a storage device stores data or a storage device is controlled to store data in a case where an exemplary embodiment is a computer program. A module may correspond to a function on a one-to-one basis, and, in installation, a single module may be configured with a single program, a plurality of modules may be configured with a single program, and, conversely, a single module may be configured with a plurality of programs. A plurality of modules may be executed by a single computer, and a single module may be executed by a plurality of computers in a distributed or parallel environment. Other modules may be included in a single module. Hereinafter, the term "connection" indicates not only physical connection but also logical connection (for example, transmission and reception of data, an instruction, a reference relationship between pieces of data, and login). The term "setting in advance" indicates that setting is performed prior to a target process, and indicates not only that setting is performed before a process according to the present exemplary embodiment is started but also such that, even after a process according to the present exemplary embodiment is started, setting is performed depending on a situation or a state at the time or a situation or a state hitherto in a case where a target process is not performed. In a case where there are "a plurality of preset values", the values may be different from each other, and two or more values may be the same as each other (of course, the two or more values include all of the values). The description that "in a case of A, B is performed" indicates that "it is determined whether or not A is satisfied, and, in a case where it is determined that A is satisfied, B is performed". However, this excludes a case where determination of whether or not A is satisfied is unnecessary. In a case where objects are listed such as "A, B, and C", the objects are exemplarily listed unless in other cases mentioned, and a case where only one thereof (for example, only A) is selected is included.

A system or an apparatus also includes not only a case where a plurality of computers, pieces of hardware, and apparatuses are configured to be connected to each other via communication means such as a network (the "network" includes communication connection on a one-to-one basis) but also a case of being configured with a single computer, a single piece of hardware, and a single apparatus. The "apparatus" and the "system" are used as terms having an identical meaning. Of course, the "system" does not include systems that are merely a social "mechanism" (that is, a social system) that is an artificial arrangement.

Target information is read from a storage device, the process is performed, and a process result is written into the storage device for each process performed by each module or for each process in a case where a plurality of processes are performed in a module. Therefore, description of reading for a storage device before a process and writing for the storage device after the process will be omitted.

An image reading apparatus 100 of the present exemplary embodiment has a function of reading a business card and assigning an attribute for managing the business card. As shown in the example in Fig. 1, the image reading apparatus 100 is configured to include at least a processor 105 and a memory 110 that are connected to each other via a bus 198 to exchange data. In addition to this, the image reading apparatus 100 may have an output device 185, a reception device 190, and a communication device 195. Data is exchanged between the processor 105, the memory 110, the output device 185, the reception device 190, and the communication device 195 via the bus 198.

The image reading apparatus 100 here is an image reading apparatus that reads a business card, and (1) receives an attribute that is entered through a user' s operation, (2) reads a business card, and (3) assigns an attribute to a business card image. Examples of the image reading apparatus 100 include a multi-function peripheral and a smartphone. The business card image to which the attribute is assigned is sent to a business card management apparatus. However, the image reading apparatus 100 is not the business card management apparatus itself. Any business card may be used as long as the business card can be read as an image, any material (paper, plastic, or the like) may be employed, and, although a business card generally has a large size, any size may be employed.

The block diagram of Fig. 1 also shows a hardware configuration example of a computer realizing the present exemplary embodiment. A hardware configuration of a computer on which a program as the present exemplary embodiment is executed is a computer as exemplified in Fig. 1, and is, specifically, a personal computer, a computer that may be used as a server, and the like. As a specific example, the processor 105 is used as a processing unit, and the memory 110 is used as a storage device.

There may be one processor 105 or a plurality of processors 105. The processor 105 includes, for example, a central processing unit (CPU) and a microprocessor. In a case where a plurality of processors 105 are used, either tightly coupled multiprocessors or a loosely coupled multiprocessors may be used. For example, a plurality of processor cores may be mounted in one processor 105. A system in which a plurality of computers are connected via a communication path to behave virtually like one computer may be employed. As a specific example, the system may be configured as a cluster system or a computer cluster by using loosely coupled multiprocessors. The processor 105 executes a program in a program memory 140.

The memory 110 may include, for example, a semiconductor memory such as a register or a cache memory inside the processor 105, may be a main memory that is a main storage device configured with a random access memory (RAM) , a read only memory (ROM) , or the like, may be an internal storage device such as a hard disk drive (HDD) or a solid state drive (SSD) that functions as a persistent storage device, may be an external storage device or an auxiliary storage device such as a CD, a DVD, Blu-ray (registered trademark) disc, a USB memory, or a memory card, or may include a storage device of a server or the like connected via a communication line.

The memory 110 has a data memory 120 that generally stores data and the program memory 140 that generally stores programs. In addition to the information and the module program shown in the figure, the data memory 120 and the program memory 140 may store a program such as an OS for starting the computer and data such as parameters that change appropriately in executing the module.

The output device 185 includes, for example, a display device 187 and a printing device 189. The display device 187 such as a liquid crystal display, an organic EL display, a 3D display, or a projector displays a process result from the processor 105, data in the data memory 120, or the like as text, image information, or the like. The printing device 189 such as a printer or a multi-function peripheral prints the process result from the processor 105, the data in the data memory 120, or the like. The output device 185 may include a speaker, an actuator that vibrates an apparatus, and the like.

The reception device 190 has, for example, an instruction reception device 192 and a reading device 194. The instruction reception device 192 such as a keyboard, a mouse, a microphone, and a camera (including a line-of-sight detection camera) receives data based on a user' s operation (including an action, voice, line of sight, and the like) thereon.

There may be provided a touch screen having functions of both the display device 187 and the instruction reception device 192. In this case, regarding of realization of a function of the keyboard, the function of the keyboard may be realized by drawing a keyboard (a so-called software keyboard or a screen keyboard) on a touch screen by using software without a physical keyboard.

As user interfaces, typically, the display device 187 and the instruction reception device 192 are used.

The reading device 194 such as a scanner or a camera reads or images a document and receives generated image data. In particular, the image reading apparatus 100 reads a business card. Hereinafter, an image obtained by reading the business card will be referred to as a business card image. The reading device 194 may have a function of an automatic document feeder (or an automatic double-sided document feeder).

The communication device 195 is a communication line interface such as a network card for connection to other devices via a communication line.

In the present exemplary embodiment, in a case of a computer program, the computer program that is software is read into the program memory 140 of the present hardware configuration, and the software and the hardware resources cooperate with each other to realize the present exemplary embodiment. That is, the present exemplary embodiment is specifically realized by using the hardware resources (including at least the processor 105, and the memory 110, and, in some cases, the output device 185, the reception device 190, and the communication device 195), and thus information processing based on the software uses the laws of nature as a whole.

The hardware configuration shown in Fig. 1 corresponds to one configuration example, and the present exemplary embodiment is not limited to the configuration shown in Fig. 1, and any configuration in which the modules described in the present exemplary embodiment can be executed may be used. For example, as the processor 105, a graphics processing unit (GPU) (including general-purpose computing on graphics processing units (GPGPU)) may be used, or some modules may be executed by dedicated hardware (for example an application specific integrated circuit (ASIC) or reconfigurable integrated circuits (specific examples include a field programmable gate array (FPGA)), some modules may be provided in an external system and connected via a communication line, and a plurality of systems shown in Fig. 1 may be connected to each other via a communication line to cooperate with each other. In particular, in addition to servers and personal computers, the processor 105 may be incorporated into mobile information communication apparatuses (including mobile phones, smartphones, mobile apparatuses, wearable computers, and the like), home information appliances, robots, copiers, fax machines, scanners, printers, and multi-function peripherals (in the present exemplary embodiment, an image processing apparatus that has at least a function of a scanner and has two or more functions of a printer, a copier, a fax machine, and the like) .

The processor 105 is connected to the memory 110, the output device 185, the reception device 190, and the communication device 195 via the bus 198. The processor 105 executes processing according to a computer program that describes an execution sequence of each module that is a program in the program memory 140. For example, with reception of a user's operation in the instruction reception device 192 as a trigger, a process using a module corresponding to the operation in the program memory 140 is executed, and a process result is stored into the data memory 120, is output to the display device 187, or is transmitted to another device by controlling the communication device 195.

The memory 110 has the data memory 120 and the program memory 140, and is connected to the processor 105, the output device 185, the reception device 190, and the communication device 195 via the bus 198.

The data memory 120 has a business card image storage module 122 and a business card attribute storage module 124.

The business card image storage module 122 stores a business card image read by the reading device 194. The business card image may be an image obtained by reading any of a color image, a black-and-white binary image, or a grayscale image.

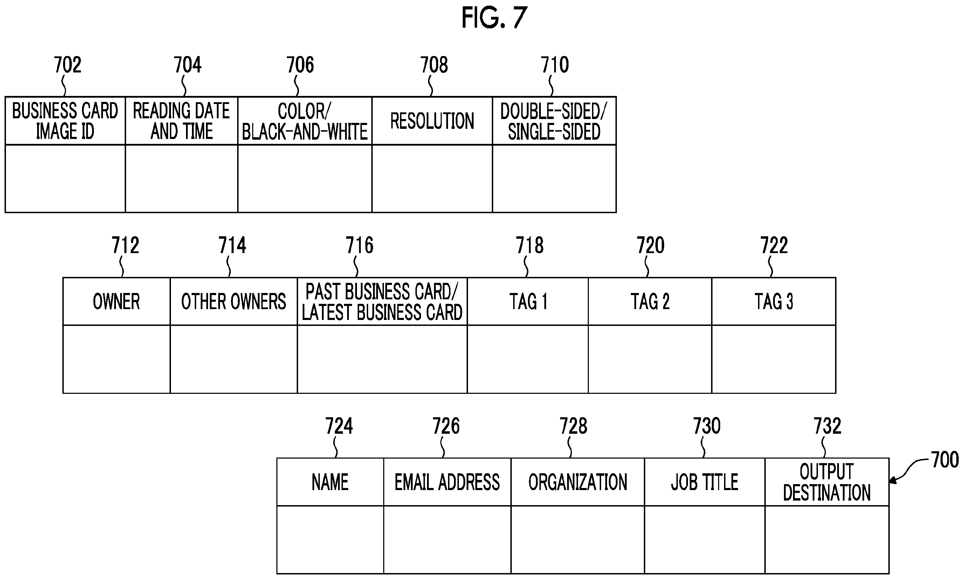

The business card attribute storage module 124 stores an attribute of the business card image stored in the business card image storage module 122. For example, a business card management table 700 and the like, which will be described later by using an example shown in Fig. 7, are stored.

The program memory 140 stores a user interface (UI) control module 142, a business card image management module 144, and a user authentication module 146.

The UI control module 142 performs a process related to a user interface of the image reading apparatus 100. The UI control module 142 receives entry of an attribute for managing a business card and an instruction for reading a business card from a user.

The business card image management module 144 performs a process related to the business card image.

The user authentication module 146 performs a process related to user authentication for logging in to the image reading apparatus 100. The user authentication may be any of card authentication of reading a card owned by the user, authentication of entering a login name and a password, or biometric authentication of recognizing a fingerprint, a face, or the like.

The business card image management module 144 causes the reading device 194 to read the business card in response to the instruction received by the UI control module 142.

The business card image management module 144 assigns the attribute for managing the business card received by the UI control module 142 to the business card image. The attribute includes at least information regarding an owner of the business card. Here, the "owner of the business card" is a person who owns the business card to be read, and is not a person written on the business card (an original owner of the business card) . The user using the image reading apparatus 100 may be an "owner of the business card". The user using the image reading apparatus 100 is a person who has been subjected to user authentication by the user authentication module 146.

The UI control module 142 may display the user of the business card management apparatus that manages the business card image as an "owner of the business card" in a selectable manner. The business card image management module 144 may set a person (also a user of the business card management apparatus) selected by the user as an "owner of the business card".

The business card image management module 144 may set a person who participated in a meeting together with an "owner of the business card" to be added as an owner of the business card.

Here, the "meeting" is a meeting in which a plurality of people may gather to exchange business cards, and includes, for example, a conference, a preliminary arrangement, and a social gathering.

In extracting "people who have met with a user", a schedule of the user may be obtained from the schedule management device, meetings that the user participated in the past may be extracted, and another user who has participated in the meeting may be extracted from the schedule management device. The "other user" here may be subject to a condition that the other user belongs to the same group as the target user. The number of meetings to be acquired may be one or may be multiple. In a case where a single meeting is acquired, the closest meeting to the present may be acquired. In a case where a plurality of meetings are acquired, the priority of a meeting closest to the present may be raised such that the meeting is displayed to the user in a selectable manner.

The business card image management module 144 may cause at least information indicating whether or not a business card corresponding to the business card image is a past business card to be included as an attribute assigned to the business card image.

Here, the "past business card" is a business card of a person written on the business card, but is a business card that the person had in the past. For example, in a case where a user's department has been changed, a business card with the department name before the change is the "past business card", and a business card with the department name after the change is the "current business card". In a case where a user has gotten a promotion or the like, a business card with a job title before the promotion is the "past business card", and a business card with a job title after the promotion is the "current business card". The reason that not only the "current business card" but also the "past business card" is read is that the past career is also useful information for knowing the person. This is also to notify the business card management system that there are a plurality of business cards for the same person. A user causing a business card to be read owns a plurality of business cards of the same person, and an operation of reading the business card does not matter in the order of the "current business card" and the "past business card". After the "current business card" is read, the "past business card" may be read, or after the "past business card" is read, the "current business card" may be read.

In a case where a business card is the past business card, the business card image management module 144 may associate the past business card with the current business card. In the association, a name or an email address written on the business card may be used. In other words, a business card with a name that matches a name written on the past business card is set as the current business card, or a business card with an email address that matches an email address written on the past business card is set as the current business card. Of course, a business card with a name and an email address that match a name and an email address written on the past business card may be set as the current business card.

Here, the term "association" refers to making the business card image management module 144 possible to extract the past business card from the current business card, or conversely, making the business card image management module 144 possible to extract the current business card from the past business card. More specifically, the association may be performed, for example, by storing a link to the past business card data in the current business card data, conversely, storing a link to the current business card data in the past business card data, or storing the current business card data and the past business card data in a single table.

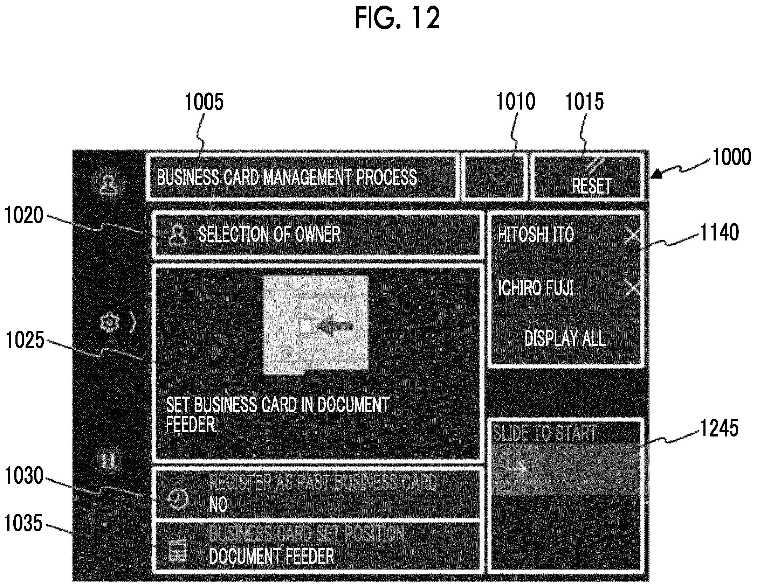

The UI control module 142 may perform control such that an attribute entry screen and a screen for receiving a business card reading instruction are displayed on the same screen. As will be described later using examples in Figs. 12 to 14, as the attribute entry screen, for example, a business card owner setting screen, a screen for setting a tag to be assigned to a business card, a screen for setting whether or not a business card is a past business card, and the like are used. These screens and the screen for receiving a business card reading instruction (in the examples in Figs. 12 to 14, a reading start button (selectable) 1245) are displayed on the same screen, and thus a user easily gives a reading instruction.

The UI control module 142 may perform control such that an instruction for reading a business card is not capable of being given until a preset attribute is set.

Here, as "performing control such that instructions cannot be given", there is control such as (1) not displaying a "scanning start button", and (2) displaying the button but not starting reading even though the button is selected.

The UI control module 142 may perform control such that an instruction for reading a business card can be given after a preset attribute is set.

Regarding "after the preset attribute is set", the "scanning start button" may be displayed on a plurality of screens in a selectable manner such that an instruction for reading the business card can be given. That is, not only a main screen but also sub-screens (all sub-screens or some of the sub-screens) are displayed such that the "scanning start button" is selectable. The sub-screens are included, and thus a business card can be read without returning to the main screen.

The "preset attribute" may be information regarding an owner of the business card and information indicating whether or not the business card is a past business card. The information regarding the owner of the business card and the information indicating whether or not the business card is a past business card are information necessary to manage the business card, and can be easily set even though an operation screen of the image reading apparatus 100 is small.

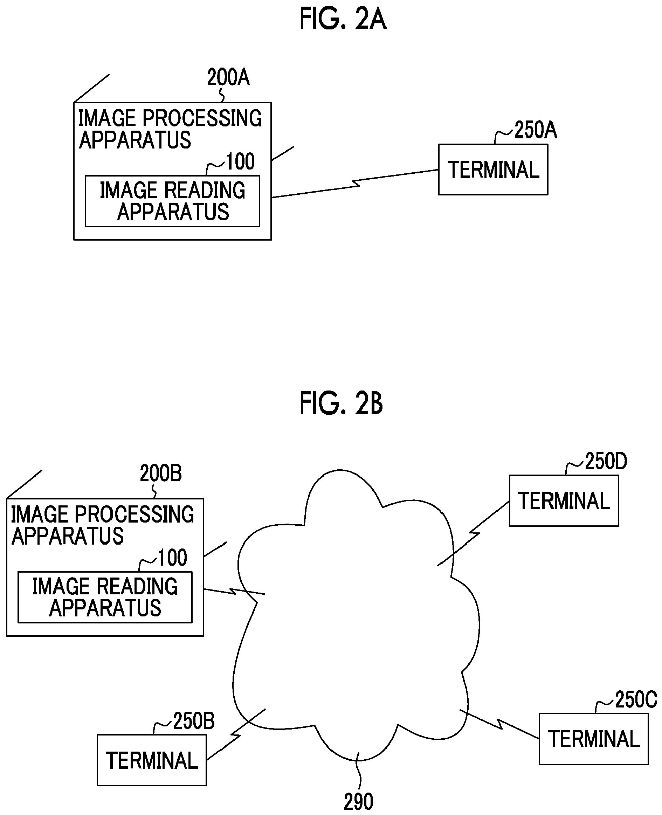

Figs. 2A and 2B are explanatory diagrams showing system configuration examples using the present exemplary embodiment.

An image processing apparatus 200 includes the image reading apparatus 100 and has a function of the image reading apparatus 100. The image processing apparatus 200 corresponds to, for example, a scanner or a multi-function peripheral.

A terminal 250 is installed with business card management software and is an example of a business card management apparatus. The terminal 250 corresponds to, for example, a personal computer (including a notebook computer) , or a mobile information communication apparatus.

Fig. 2A shows an example of a system in which a terminal 250A and an image processing apparatus 200A are connected to each other via a communication line such as a Universal Serial Bus (USB).

An image processing apparatus 200A reads a business card and transmits a business card image to which an attribute (an owner or information indicating whether or not the business card is a past business card) designated at the time of reading the business card is assigned to the terminal 250A. The terminal 250A receives the business card image to which the attribute is assigned and manages the business card image with the business card management software.

Fig. 2B shows an example of a system in which an image processing apparatus 200B, a terminal 250B, a terminal 250C, and a terminal 250D are connected to each other via a communication line 290. The communication line 290 may be a wireless line, a wired line, or a combination thereof, and may be, for example, the Internet or an intranet as a communication infrastructure.

The image processing apparatus 200B reads a business card, and transmits a business card image to which an attribute (an owner or information indicating whether or not the business card is a past business card) designated at the time of reading the business card is assigned to the terminal 250 used by a user of the image processing apparatus 200B or the terminal 250 used by a person who participated in a meeting together with the user. The destination terminal 250 receives the business card image to which the attribute is assigned and manages the business card image with the business card management software.

The function of the business card management software may be realized as a cloud service. In that case, the image processing apparatus 200B reads the business card and transmits the business card image to which the attribute designated at the time of reading the business card is assigned to a cloud server that provides a business card management service. The business card management service is a service of receiving the business card image to which the attribute is assigned and managing the business card image.

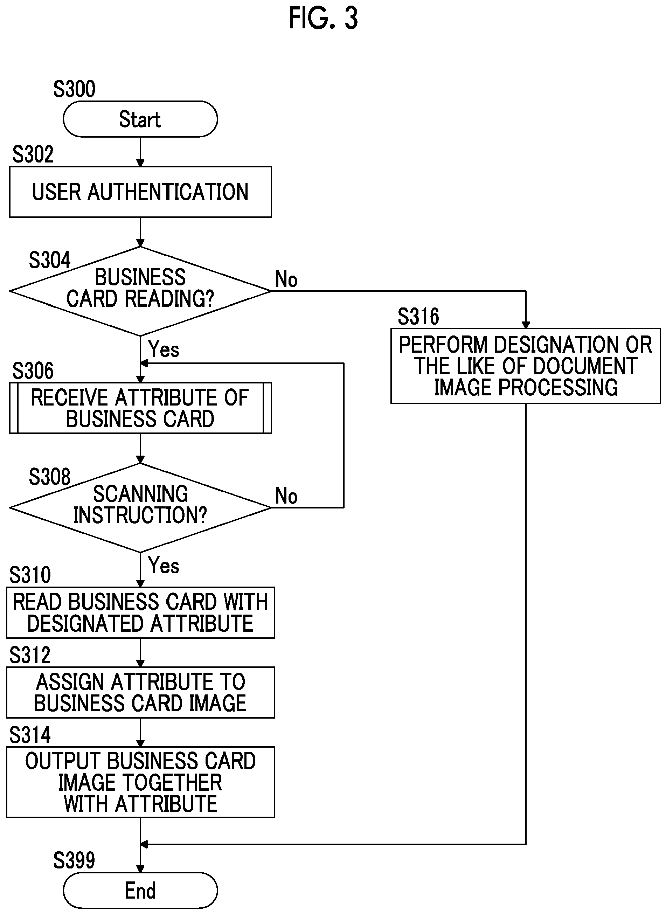

Fig. 3 is a flowchart showing a process example according to the present exemplary embodiment.

In step S302, user authentication is performed. A login process for the user to use the image processing apparatus 200 is performed. As described above, any of card authentication of reading a card owned by the user, authentication of entering a login name and a password, or biometric authentication of recognizing a fingerprint, a face, or the like may be performed. The process may proceed to step S304 without performing this step, that is, without performing user authentication. This corresponds to a case where the image processing apparatus 200 can be used without performing user authentication.

In step S304, it is determined whether or not the user's operation is business card reading, and in a case where the user' s operation is business card reading, the process proceeds to step S306, and, in other cases, the process proceeds to step S316.

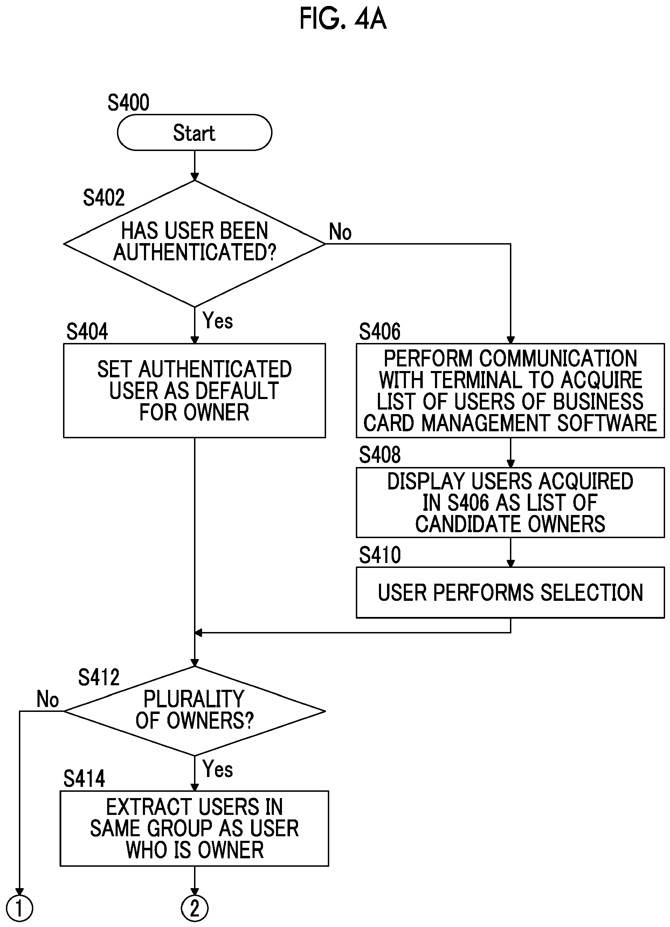

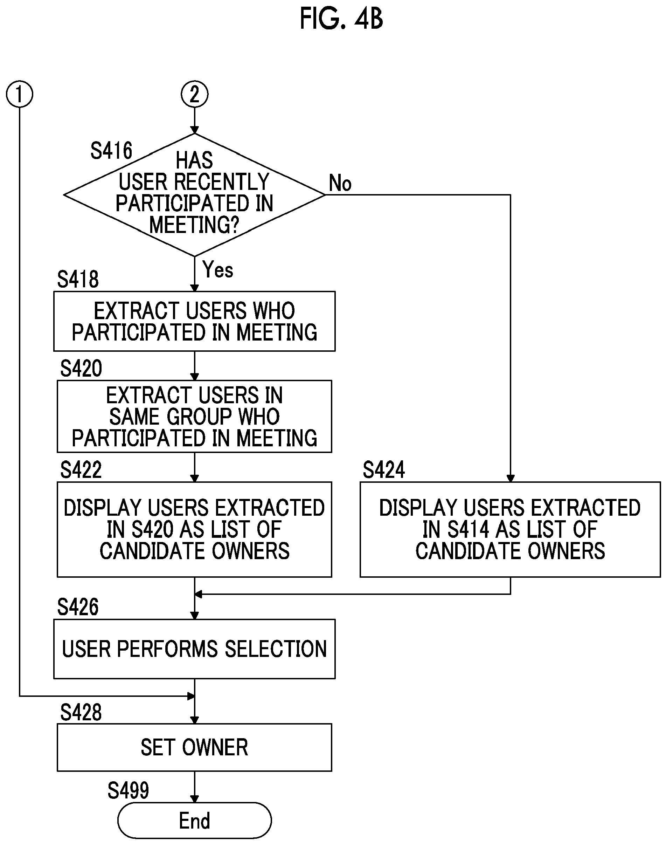

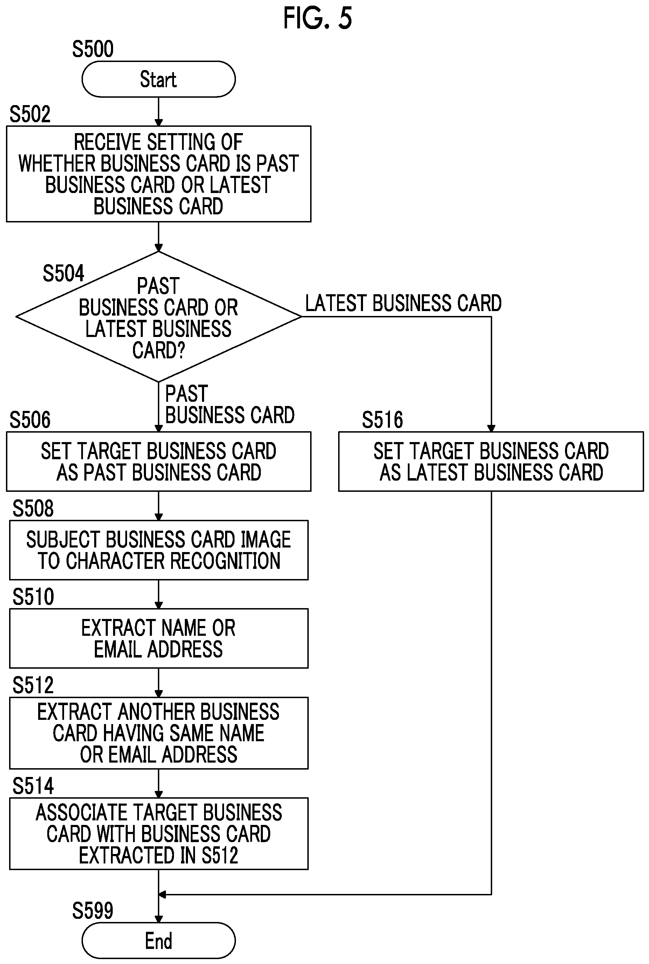

In step S306, an attribute of the business card that is set through the user's operation is received. A detailed process in step S306 will be described later with reference to flowcharts shown in examples in Figs. 4A and 4B, and 5. In the flowcharts shown in the example in Figs. 4A and 4B, an owner of a target business card is set as an attribute, and in the flowchart shown in the example in Fig. 5, information regarding whether or not a target business card targeted is a past business card is set as an attribute. It may be included to set a tag (also referred to as a phrase or a keyword used as a clue for the search) used to search for a target business card as an attribute. Other general attributes of image reading, such as a reading resolution, color/black and white, double-sided reading, or single-sided reading, may be set.

In step S308, it is determined whether or not it is detected that a scanning instruction has been given through the user's operation, and in a case where the scanning instruction is detected, the process proceeds to step S310, and in other cases, the process returns to step S306.

In step S310, the business card is read with the attribute designated by the user. For example, a target business card is read according to an attributes indicating a reading resolution, color/black and white, double-sided reading, single-sided reading, or the like.

In step S312, the attribute is assigned to a business card image. In addition to the attribute set in step S306, attributes found by reading the business card (for example, a data capacity of the business card image) may also be assigned. Attributes (for example, a name, an email address, an organization to which a person belongs, and a job title written on the business card) generated by a character recognition process on the business card image may also be assigned.

In step S314, the business card image is output together with the attribute. An output destination here is the business card management apparatus. Specific examples thereof include the terminals 250A and 250B shown in the example in Figs. 2A and 2B.

As attribute data to be assigned to the business card image, for example, there is a business card management table 700 shown in Fig. 7.

Fig. 7 is an explanatory diagram showing a data structure example of the business card management table 700. The business card management table 700 includes a business card image ID field 702, a reading date-and-time field 704, a color/black-and-white field 706, a resolution field 708, a double-sided/single-sided field 710, an owner field 712, an other-owners field 714, and a past business card/latest business card field 716, a tag 1 field 718, a tag 2 field 720, a tag 3 field 722, a name field 724, an email address field 726, an organization field 728, a job title field 730, and an output destination field 732. In the present exemplary embodiment, the business card image ID field 702 stores information (specifically, an image identification (ID) for uniquely identifying a business card image. The reading date-and-time field 704 stores the date and time (which may be year, month, day, hour, minute, second, second or less, or a combination thereof) at which the business card image is read. The color/black-and-white field 706 stores information indicating whether the business card image is a color, a black-and-white binary image, or a black-and-white grayscale image. The resolution field 708 stores a resolution of the business card image. The double-sided/single-sided field 710 stores information indicating whether the business card image is a double-sided image or a single-sided image. The owner field 712 stores an owner of the business card. The other-owners field 714 stores other owners of the business card. The past business card/latest business card field 716 stores information indicating whether the business card is a past business card or a latest business card. The tag 1 field 718 stores a tag 1 assigned to the business card image. The tag 2 field 720 stores a tag 2 assigned to the business card image. The tag 3 field 722 stores a tag 3 assigned to the business card image. Of course, the number of tags may be three or more, or less than three. The name field 724 stores a name written on the business card. The email address field 726 stores an email address written on the business card. The organization field 728 stores an organization written on the business card. The job title field 730 stores a job title written on the business card. The output destination field 732 stores an output destination (for example, an ID or a Uniform Resource Locator (URL) of the business card management apparatus) in which the business card image is registered. The values from the name field 724 to the job title field 730 store results of character recognition of the business card image.

In step S316, for example, document image processing is designated. A process other than business card reading is performed, and corresponds to, for example, the use of a copying function, a printing function, and a function of reading a document having the A4 size or the like.

Figs. 4A and 4B are flowcharts showing process examples according to the present exemplary embodiment. With respect to a target business card, a process example of setting an owner (an example of an attribute) of the business card is shown.

In step S402, it is determined whether or not the user has been authenticated, and in a case where the user has been authenticated, the process proceeds to step S404, and in other cases (in a case of "No"), the process proceeds to step S406. The case of "No" in step S402 is a case where step S302 in the flowchart shown in the example in Fig. 3 is not performed as described above. Of course, the case of "Yes" in step S402 is a case where step S302 in the flowchart shown in the example in Fig. 3 is performed.

In step S404, the authenticated user is set as a default (default value) for an owner.

In step S406, communication is performed with the terminal 250 to acquire a list of users of the business card management software.

In step S408, the users acquired in step S406 are displayed as a list of candidate owners.

In step S410, the user is caused to select a user from the list of candidate owners, and the process proceeds to step S412. Of course, the user selected from the list of candidates is an owner of the target business card.

In step S412, it is determined whether or not there are a plurality of owners through an operation of the user, and in a case where there are a plurality of owners, the process proceeds to step S414, and in other cases, the process proceeds to step S428. In addition to designating whether or not there are a plurality of owners, it is the same operation that the user sets whether or not to designate an owner other than the owner.

In step S414, users in the same group as the user who is an owner are extracted. For this process, for example, a user management table 800 prepared in advance may be used.

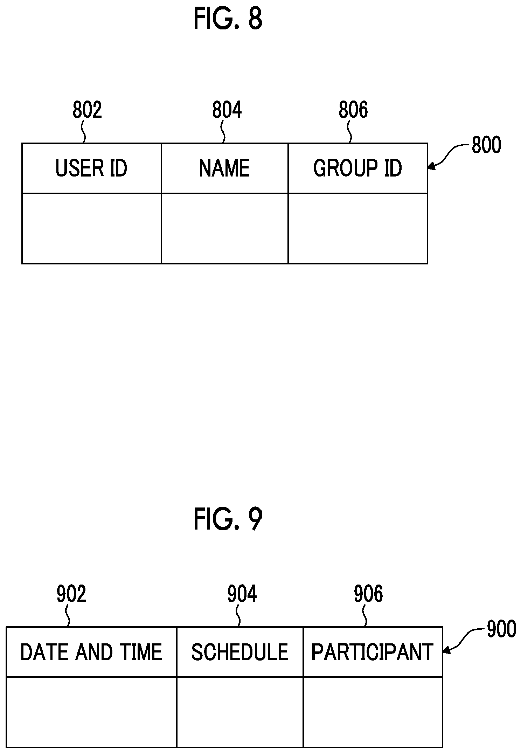

Fig. 8 is an explanatory diagram showing a data structure example of a user management table 800. The user management table 800 has a user ID field 802, a name field 804, and a group ID field 806. The user ID field 802 stores information (specifically, a user ID) for uniquely identifying a user in the present exemplary embodiment. The name field 804 stores the user's name. In the present exemplary embodiment, the group ID field 806 stores information (specifically, a group ID) for uniquely identifying a group to which the user belongs. The user management table 800 is used, and thus a group designated a user and other users belonging to the group can be extracted.

In step S416, it is determined whether or not the user has recently participated in a meeting. In a case where the user has participated, proceeds to step S418, and in other cases, the process proceeds to step S424. For this process, for example, a schedule management table 900 prepared in advance may be used.

Fig. 9 is an explanatory diagram showing a data structure example of a schedule management table 900. The schedule management table 900 has a date-and-time field 902, a schedule field 904, and a participant field 906. There is the schedule management table 900 for each user, and a schedule of the user is stored. The date-and-time field 902 stores the scheduled date and time. The schedule field 904 stores a schedule (for example, a meeting) at the date and time. The participant field 906 stores participants in the meeting.

The determination in step S416 may be performed by referring to the date-and-time field 902 of the schedule management table 900 of the target user and extracting the meetings within a preset period from the present to the past.

In step S418, users who participated in the meeting are extracted. The users may be extracted by using the participant field 906 of the schedule management table 900.

In step S420, users in the same group who participated in the meeting are extracted. Specifically, the users may be extracted according to a logical product (AND) for the users extracted in step S414 and step S418.

In step S422, the users extracted in step S420 are displayed as a list of candidate owners. An owner selected from this list is a person who is in the same group as the initially selected owner (the user selected in step S404 or step S410) and who participated in the same meeting. The same group member who participated in the same meeting owns the same business card, and in a case where one of the group members reads and registers the business card image, other group members are not required to perform the same operation (reading and registering the business card image).

In step S424, the users extracted in step S414 are displayed as a list of candidate owners. An owner selected here is a person who belongs to the same group as the initially selected owner (the user selected in step S404 or step S410) . This is because members of the same group can work smoothly by sharing business card information.

In step S426, the user performs selection.

In step S428, an owner is set. The target business card may be owned by one person or a plurality of persons.

Fig. 5 is a flowchart showing a process example according to the present exemplary embodiment. The process example is an example of setting information (an example of an attribute) indicating whether or not a target is business card is a past business card.

In step S502, setting of whether the business card is a past business card or a latest business card through the user's operation is received.

In step S504, it is determined whether the business card is a past business card or a latest business card, and in a case of a past business card, the process proceeds to step S506, and in a case of a latest business card, the process proceeds to step S516.

In step S506, the target business card is set as a past business card.

In step S508, the business card image is subjected to character recognition.

In step S510, a name or an email address is extracted. For example, text at a preset position in the business card (for example, text near the center) may be extracted as the name and the email address, text with a preset size may be extracted as the name and the email address, or text including preset letters may be extracted as the name and the email address.

In step S512, another business card having the same name or email address is extracted. A business card having the same name or email address as the target business card (past business card) is a latest business card.

In step S514, the target business card is associated with the business card extracted in step S512.

In step S516, the target business card is set as the latest business card.

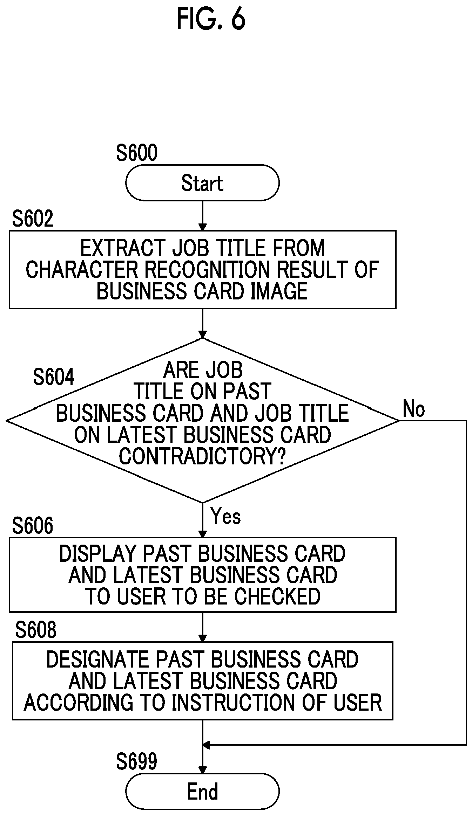

After step S512, a process according to the flowchart shown in the example in Fig. 6 may be performed.

Fig. 6 is a flowchart showing a process example according to the present exemplary embodiment.

In step S602, a job title is extracted from the character recognition result of the business card image.

In step S604, it is determined whether or not the job title on the past business card and the job title on the latest business card are contradictory. In a case where the job titles are contradictory, the process proceeds to step S606, and in other cases, the process is finished (step S699).

In step S606, the past business card and the latest business card are displayed to the user, and the user is requested to check which one is the latest business card (or the past business card).

In step S608, the past business card and the latest business card are designated according to an instruction of the user.

The term "contradictory" in step S604 refers to a case where the job title on the past business card is higher and the job title on the latest business card is lower. In order to determine whether the job title is higher or lower, a list in which job titles are arranged in descending order may be prepared in advance. For example, in a case where there is the list including "president, department manager, and section manager", a case where a job title on the past business card is "department manager" and a job title on the latest business card is "section manager" is contradictory. A case where the job titles are identical or a case where a job title on the past business card is lower and a job title on the latest business card is higher is not contradictory. However, since there is a possibility of demotion, in a case where there is a contradiction, a process of requesting the user to check the demotion is performed.

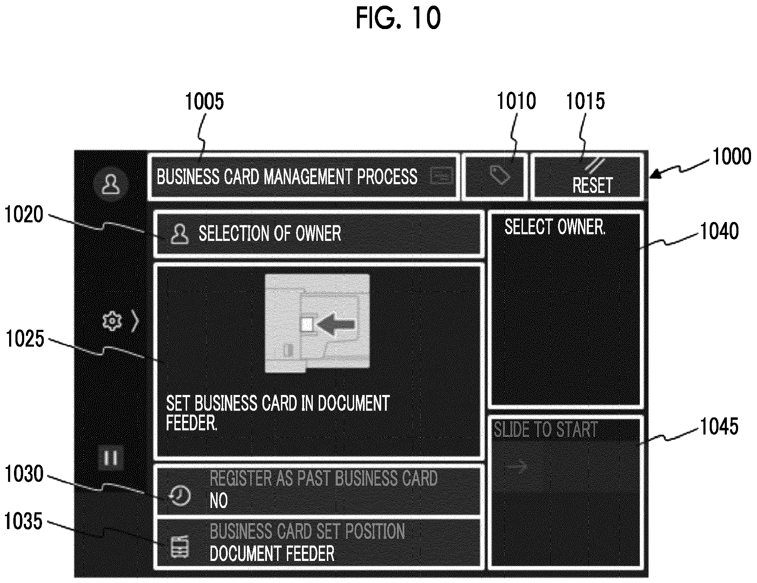

Fig. 10 is an explanatory diagram showing a display example according to the present exemplary embodiment.

A screen 1000 is a touch panel of the image processing apparatus 200, and provides display to a user and receives an operation from the user. The screen 1000 shown in the example in Fig. 10 is a main screen (an initial screen for reading a business card) . In this example, an owner of the business card is selected from among users of the business card management apparatus. A title field 1005, a tag button 1010, a reset button 1015, an owner selection instruction field 1020, a comment field 1025, a past business card selection instruction field 1030, a business card set position instruction field 1035, a comment field 1040, and a reading start button (not selectable) 1045 are displayed on the screen 1000.

A "business card management process" is displayed in the title field 1005.

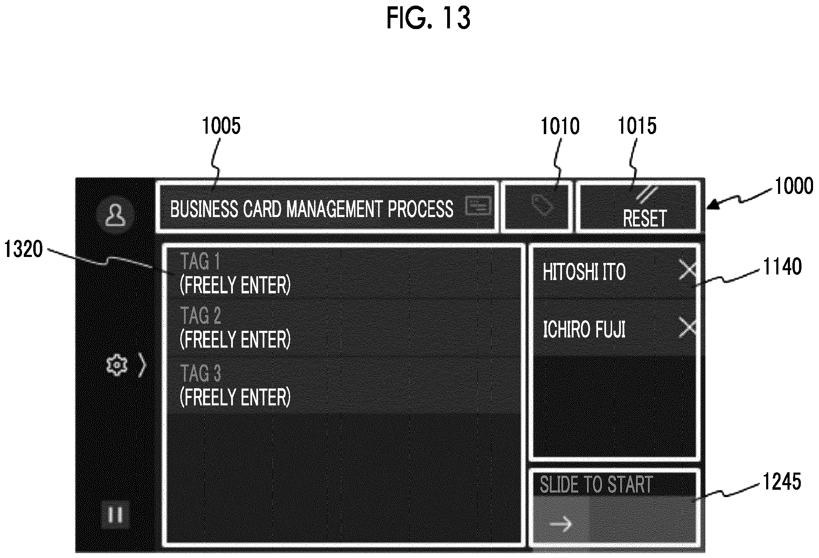

In a case where the tag button 1010 is selected by the user, the screen transitions to a tag input screen (refer to an example in Fig. 13 that will be described later).

In a case where the reset button 1015 is selected by the user, settings hitherto are cleared (returned to initial values).

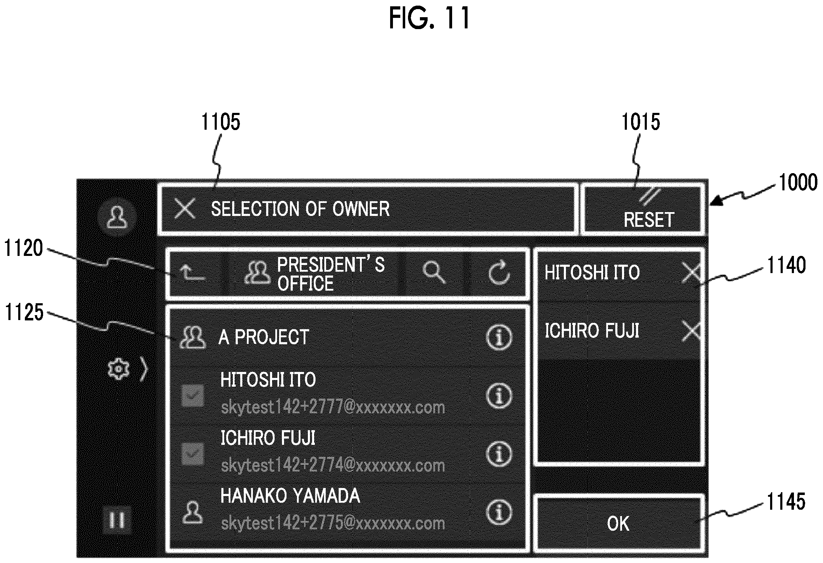

A "selection of owner" is displayed in the owner selection instruction field 1020. In a case where the owner selection instruction field 1020 is selected by the user, transition to the screen 1000 shown in an example in Fig. 11 occurs.

"Set a business card in the document feeder" is displayed in the comment field 1025.

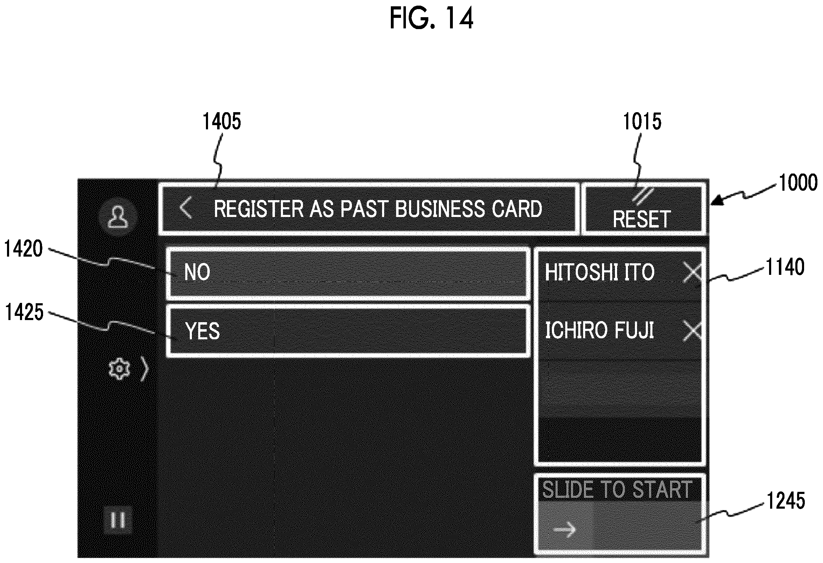

In the past business card selection instruction field 1030, "register as a past business card" is displayed, and, in this example, "no" (that is, the latest business card described above) is selected. In a case where the past business card selection instruction field 1030 is selected by the user, the screen transitions to a screen for setting whether or not to register as a past business card (refer to an example in Fig. 14 that will be described later).

In the business card set position instruction field 1035, a "business card set position" is displayed, and, in this example, a "document feeder" is selected. In addition to this, there are options such as a platen.

"Select an owner" is displayed in the comment field 1040.

The reading start button (not selectable) 1045 is displayed as gray-out text such as "slide to start". In other words, the "scanning start button" cannot be selected such that the business card reading process cannot be performed. This is because an owner of the business card has not been set. Also in a case where "whether or not to register as a past business card" has not been set, the "scanning start button" cannot be selected.

On the screen 1000, an attribute for managing a business card can be entered from the tag button 1010, the owner selection instruction field 1020, and the past business card selection instruction field 1030, and a reading instruction can be executed from the reading start button (not selectable) 1045. As described above, the screen for entering an attribute for managing a business card and the reception screen for receiving a business card reading instruction are displayed on the same screen, and thus the user can easily perform a series of operations of entering the attribute and executing the business card reading instruction.

Fig. 11 is an explanatory diagram showing a display example according to the present exemplary embodiment.

A title field 1105, a reset button 1015, a group field (president's office) 1120, a group field (A project) 1125, an owner list field 1140, and an OK button 1145 are displayed on the screen 1000.

"Selection of owner" is displayed in the title field 1105.

A group name is displayed in the group field (president's office) 1120 and the group field (A project) 1125. The image processing apparatus 200 and the business card management apparatus are linked to each other, and the image processing apparatus 200 extracts, from the business card management apparatus, the name of the group using the business card management apparatus and a list of users belonging to the group, and displays the group name in the group field (president's office) 1120 and group field (A project) 1125.

For example, a "president's office" is displayed in the group field (president's office) 1120.

For example, "A project" is displayed in the group field (A project) 1125. The group field (A project) 1125 is in a state of being selected by the user, and users belonging to the A project group and email addresses thereof are displayed. Here, "Hitoshi Ito" and "Ichiro Fuji" are selected by the user, and the two persons are displayed in the owner list field 1140.

In a case where the OK button 1145 is selected by the user, the screen transitions to the screen 1000 shown in the example in Fig. 12.

In the state of the screen 1000 shown in the example in Fig. 11, since an owner has not been selected, the "scanning start button" is not displayed.

Fig. 12 is an explanatory diagram showing a display example according to the present exemplary embodiment.

On the screen 1000, the title field 1005, the tag button 1010, the reset button 1015, the owner selection instruction field 1020, the comment field 1025, the past business card selection instruction field 1030, the business card set position instruction field 1035, the owner list field 1140, and a reading start button (selectable) 1245 is displayed.

The comment field 1040 is changed to the owner list field 1140. In other words, it is indicated that owners of the business card are "Hitoshi Ito" and "Ichiro Fuji".

The reading start button (not selectable) 1045 is changed to the reading start button (selectable) 1245, and, in this state, the reading start button (selectable) 1245 is displayed to be selectable by the user. In a case where the reading start button (selectable) 1245 is selected, reading of the business card is started.

In this state, in a case where the tag button 1010 is selected by the user, the screen transitions to the screen 1000 shown in an example in Fig. 13.

In this state, in a case where the past business card selection instruction field 1030 is selected by the user, the screen transitions to the screen 1000 shown in the example in Fig. 14.

Fig. 13 is an explanatory diagram showing a display example according to the present exemplary embodiment.

The title field 1005, the tag button 1010, the reset button 1015, a tag entry field 1320, the owner list field 1140, and the reading start button (selectable) 1245 are displayed on the screen 1000. The screen is the screen 1000 for setting a tag.

In the tag entry field 1320, for example, "tag 1 (freely enter)", "tag 2 (freely enter)", and "tag 3 (freely enter)" are displayed. A tag to be assigned to the target business card image is entered to each field in the tag entry field 1320 by the user. The entered tag is assigned to the business card image and registered in the business card management apparatus.

Since the screen 1000 shown in the example in Fig. 13 has transitioned from the state shown in the example in Fig. 12, selection of an owner and setting of whether or not the business card is a past business card have been completed. Therefore, even in the state shown in the example in Fig. 13, the reading start button (selectable) 1245 is displayed to be selectable by the user, and, in a case where the reading start button (selectable) 1245 is selected, reading of the business card is started. In a case where the transition is made from the state shown in the example in Fig. 10, since selection of an owner is not completed, the reading start button (not selectable) 1045 shown in the example in Fig. 10 is still displayed, and the "scanning start button" cannot be selected such that a business card reading process cannot be performed.

Fig. 14 is an explanatory diagram showing a display example according to the present exemplary embodiment.

On the screen 1000, a title field 1405, the reset button 1015, a past business card non-setting button 1420, a past business card setting button 1425, the owner list field 1140, and the reading start button (selectable) 1245 are displayed. The screen is the screen 1000 for setting information regarding "whether or not the business card is a past business card".

"Register as a past business card" is displayed in the title field 1405.

"No" is displayed on the past business card non-setting button 1420. "Yes" is displayed on the past business card setting button 1425. The user selects either the past business card non-setting button 1420 or the past business card setting button 1425. In this example, the past business card non-setting button 1420 is selected.

In the same manner as the screen 1000 shown in the example in Fig. 13, the screen 1000 shown in the example in Fig. 14 has transitioned from the state shown in the example in Fig. 12, and thus selection of an owner and setting of whether or not the business card is a past business card have been completed. Therefore, even in the state shown in the example in Fig. 14, the reading start button (selectable) 1245 is displayed to be selectable by the user, and, in a case where the reading start button (selectable) 1245 is selected, reading of the business card is started. In a case of transition from the state shown in the example in Fig. 10, in the example in Fig. 14, the information regarding "whether or not the business card is a past business card" has been set, but selection of an owner has not been completed. Therefore, the reading start button (not selectable) 1045 shown in the example in Fig. 10 is still displayed, and the "scanning start button" cannot be selected such that the business card reading process cannot be performed.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively.

The order of operations of the processor is not limited to one described in the embodiments above, and may be changed.

The program may be stored on a recording medium to be provided, and the program may be provided by using a communication unit. In this case, for example, the program may be understood as the invention of a "non-transitory computer readable medium storing the program".

The "non-transitory computer readable medium storing the program" indicates a computer readable recording medium storing the program, used to install, execute, and distribute the program.

The recording medium includes, for example, "a DVD-R, a DVD-RW, a DVD-RAM, or the like" which is a digital versatile disc (DVD) and is a standard defined in the DVD forum, and "a DVD+R, DVD+RW, or the like" which is a standard defined in the DVD+RW, a compact disc (CD) read only memory (CD-ROM), a CD recordable (CD-R), or a CD rewritable (CD-RW), a Blu-ray (registered trademark) disc, a magnetooptical disc (MO), a flexible disk (FD), a magnetic tape, a hard disk, a read only memory (ROM), an electrically erasable programmable read only memory (EEPROM) (registered trademark), a flash memory, a random access memory (RAM), and a secure digital (SD) memory card.

The whole or a part of the program may be recorded on the recording medium to be preserved or distributed. The program may be transmitted through communication, for example, by using a transmission medium such as a wired network used for a local area network (LAN), a metropolitan area network (MAN), a wide area network (WAN), the Internet, an intranet, or an extranet, a wireless communication network, or a combination thereof, and may be carried via a carrier wave mounted therewith.

The program may be a part or the whole of another program, or may be recorded on a recording medium along with a separate program. The program may be divided and recorded on a plurality of recording media. The program may be recorded in any restorable aspect such as compression or encryption.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

- 100:: image reading apparatus
- 105:: processor
- 110:: memory
- 120:: data memory
- 122:: business card image storage module
- 124:: business card attribute storage module
- 140:: program memory
- 142:: UI control module
- 144:: business card image management module
- 146:: user authentication module
- 185:: output device
- 187:: display device
- 189:: printing device
- 190:: reception device
- 192:: instruction reception device
- 194:: reading device
- 195:: communication device
- 198:: bus
- 200:: image processing apparatus
- 250:: terminal
- 290:: communication line

## Claims

1. An image reading apparatus comprising:
an image reading unit; and
a processor configured to:
receive entry of an attribute for managing a business card from a user,
cause the image reading unit to read the business card, and
assign the attribute to a business card image that is an image obtained by reading the business card.

2. The image reading apparatus according to claim 1, wherein the attribute includes at least information regarding an owner of the business card.

3. The image reading apparatus according to claim 2, wherein the processor is configured to:
set a user who is using the image reading apparatus as the owner.

4. The image reading apparatus according to claim 2, wherein the processor is configured to:
display a user of a business card management apparatus that manages the business card image to be selectable as the owner.

5. The image reading apparatus according to claim 3 or 4, wherein the processor is configured to:
set a person who participated in a meeting together with the owner to be added as an owner of the business card.

6. The image reading apparatus according to claim 1, wherein the attribute includes at least information indicating whether or not the business card is a past business card.

7. The image reading apparatus according to claim 6, wherein the processor is configured to,
in a case where the business card is the past business card, associate the past business card with a current business card.

8. The image reading apparatus according to claim 1, wherein the processor is configured to:
perform control such that a screen for entering the attribute and a screen for receiving a business card reading instruction are displayed on the same screen.

9. The image reading apparatus according to claim 1, wherein the processor is configured to:
perform control such that an instruction for reading the business card is not capable of being given until a preset attribute is set.

10. The image reading apparatus according to claim 1, wherein the processor is configured to:
perform control such that an instruction for reading the business card is capable of being given after a preset attribute is set.

11. The image reading apparatus according to claim 9 or 10,
wherein the preset attribute includes information regarding an owner of the business card and information indicating whether or not the business card is a past business card.

12. An image reading program causing a processor of a computer including the processor and an image reading unit to execute a process comprising:
receiving entry of an attribute for managing a business card from a user;
causing the image reading unit to read the business card; and
assigning the attribute to a business card image that is an image obtained by reading the business card.

13. An image reading method comprising:
receiving entry of an attribute for managing a business card from a user;
reading the business card; and
assigning the attribute to a business card image that is an image obtained by reading the business card.

## Amended claims

### Amended claims in accordance with Rule 137(2) EPC.

1. A system, comprising an image reading apparatus (100) and a business card management apparatus (250A, 250B, 250C, 250D), the system being **characterized in that** the image reading apparatus (100)comprises:
an image reading unit (194); and
a processor (105) configured to:
receive entry of an attribute for managing a business card from a user, wherein the attribute is extracted from the business card management apparatus (250A, 250B, 250C, 250D) operated by the user which is an owner of the business card management apparatus (250A, 250B, 250C, 250D),
cause the image reading unit (194) to read the business card, and
assign the attribute to a business card image that is an image obtained by reading the business card.

2. The image reading apparatus (100) according to claim 1,
wherein the attribute includes at least information regarding an owner of the business card.

3. The image reading apparatus (100) according to claim 2, wherein the processor (105) is configured to:
set a user who is using the image reading apparatus as the owner.

4. The image reading apparatus (100) according to claim 2, wherein the processor (105) is configured to:
display a user of a business card management apparatus that manages the business card image to be selectable as the owner.

5. The image reading apparatus (100) according to claim 3 or 4, wherein the processor (105) is configured to:
set a person who participated in a meeting together with the owner to be added as an owner of the business card.

6. The image reading apparatus (100) according to claim 1,
wherein the attribute includes at least information indicating whether or not the business card is a past business card.

7. The image reading apparatus (100) according to claim 6, wherein the processor (105) is configured to,
in a case where the business card is the past business card, associate the past business card with a current business card.

8. The image reading apparatus (100) according to claim 1, wherein the processor (105) is configured to:
perform control such that a screen for entering the attribute and a screen for receiving a business card reading instruction are displayed on the same screen.

9. The image reading apparatus (100) according to claim 1, wherein the processor (105) is configured to:
perform control such that an instruction for reading the business card is not capable of being given until a preset attribute is set.

10. The image reading apparatus (100) according to claim 1, wherein the processor (105) is configured to:
perform control such that an instruction for reading the business card is capable of being given after a preset attribute is set.

11. The image reading apparatus (100) according to claim 9 or 10,
wherein the preset attribute includes information regarding an owner of the business card and information indicating whether or not the business card is a past business card.

12. An image reading program causing a processor (105) of a computer including the processor (105) and an image reading unit (194) to execute a process **characterized by** comprising:
receiving entry of an attribute for managing a business card from a user, wherein the attribute is extracted from a business card management apparatus (250A, 250B, 250C, 250D) connected with the computer and operated by the user which is an owner of the business card management apparatus (250A, 250B, 250C, 250D);
causing the image reading unit (194) to read the business card; and
assigning the attribute to a business card image that is an image obtained by reading the business card.

13. An image reading method **characterized by** comprising:
receiving entry of an attribute for managing a business card from a user, wherein the attribute is extracted from a business card management apparatus (250A, 250B, 250C, 250D) operated by the user which is an owner of the business card management apparatus (250A, 250B, 250C, 250D);
reading the business card; and
assigning the attribute to a business card image that is an image obtained by reading the business card.
